**Europäisches Patentamt**

**European Patent Office**

**Office européen des brevets**

(11) Publication number : **0 475 911 A1**

# (12) EUROPEAN PATENT APPLICATION

(21) Application number : **91830224.1**

(22) Date of filing : **28.05.91**

(51) Int. Cl.$^5$ : **A23L 1/16,** B65D 81/32

(30) Priority : **12.09.90 IT 2174590 U**

(43) Date of publication of application :
**18.03.92 Bulletin 92/12**

(84) Designated Contracting States :
**AT BE CH DE DK ES FR GB GR LI LU NL SE**

(71) Applicant : **RAVIOLIFICIO BERTARINI S.r.l.**
**Via Castelleone, 52**
**I-26022 Costa Sant'Abramo (Cremona) (IT)**

(72) Inventor : **Bertarini, Ireneo, c/o Raviolificio**
**Bertarini**
**Via Castelleone, 52**
**I-26022 - Costa Sant'Abramo (Cremona) (IT)**

(74) Representative : **Cicogna, Franco**
**Ufficio Internazionale Brevetti Dott.Prof.**
**Franco Cicogna Via Visconti di Modrone, 14/A**
**I-20122 Milano (IT)**

(54) **Stuffed ravioli and the like alimentary pasta provided with separated pockets for holding the stuffing.**

(57)  Stuffed ravioli and the like alimentary pasta comprise separated pockets for holding the stuffing.

EP 0 475 911 A1

Jouve, 18, rue Saint-Denis, 75001 PARIS

FIG. 1

FIG. 2

## BACKGROUND OF THE INVENTION

The present invention relates to stuffed ravioli and the like alimentary pasta provided with separated pockets for holding the stuffing.

As is known, alimentary pastas comprise several types of egg-pastas including a plurality of superimposed or bent sheets of pastry, which are so arranged as to enclose small beads of a desired stuffing food material, conventionally based on meats and cheese.

More specifically, depending on the type of stuffing and the shape of the individual sheets of pastry holding the stuffing, there are made"ravioli", "tortellini", "cappelletti","agnolotti", "tortelloni" and the like.

In this connection it is to be pointed out that conventional stuffings for alimentary pasta are perishable substances which can be preserved with great difficulties.

In fact, these stuffings conventionally comprise two or more base food substance, which are for example selected from meat, cheese, vegetables, buttermilk curd, ham, Parmesan, and so on, which are minced and accurately mixed so as to provide a homogeneous paste.

On the other hand, food materials such as cheese (and in particular Parmesan) and minced vegetables are usually subjected, in the presence of moisture, to an undesired fermentation.

Accordingly, the made product, and, in particular, an industrial production product, can be, as aforesaid, properly preserved with great difficulties, even if anti-oxidating and preservative substances are included therein.

## SUMARRY OF THE INVENTION

Accordingly, the aim of the present invention is to overcome the above mentioned drawback by providing stuffed ravioli or the like alimentary pasta, which can be preserved for a time period much longer than that of conventional like products.

Within the above aim, a main object of the present invention is to provide stuffed ravioli or the like alimentary pasta, the taste characteristics of which can be held substantially unaltered even if the stuffing thereof is made of very different stuffing products.

According to one aspect of the present invention, the above mentioned aim and objects, as well as yet other objects, which will become more apparent hereinafter, are achieved by a stuffed food products, such as stuffed ravioli or alimentary pasta, characterized in that said food product comprises at least two separated pockets provided for holding corresponding food products providing, in cooperation, a conventional stuffing material.

## BRIEF DESCRIPTION OF THE DRAWING

Further characteristics and advantages of the present invention will become more apparent hereinafter from the following detailed disclosure of a preferred, though not exclusive, embodiment thereof, which is illustrated, by way of an indicative but not limitative example, in the accompanying drawings where:

Figure 1 shows a possible configuration of a food product, like a "raviolo" according to the present invention; and

Figure 2 is a cross-sectional view of this food product.

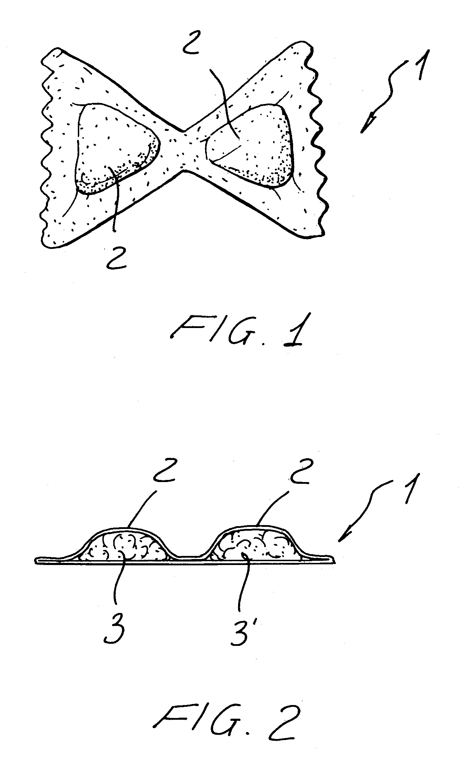

## DESCRIPTION OF THE PREFERRED EMBODIMENT

With reference to the figures of the accompanying drawing, the food product, such as stuffed ravioli or the like alimentary pasta, according to the present invention, an embodiment of which is generally indicated at the reference number 1, is made so as to comprise two or more separated pockets 2, which can be filled with corresponding alimentary or food products 3 and 3' which, jointly, will provide a substantially conventional stuffing product.

By way of an indicative example, the above mentioned two pockets can be respectively filled with cheese and meat, or meat and vegetables, or cheese and vegetables, or buttermilk curd and vegetables, or other suitable food product combinations, which have been suitably minced so as to properly meet the consumer tastes.

It should be apparent that such a separation of the stuffing components will allow the food product to be preserved for a very long duration, since the components of the stuffing do not mutually interact with a consequent possibility of alterations.

In this connection it should be apparent that the thus made ravioli will have a size like that of conventional ravioli so as to allow the consumer to heat them in the most appropriate condition.

From the above disclosure it should be apparent that the invention fully achieves the intended aim and objects.

While the invention has been disclosed and illustrated with reference to a preferred embodiment thereof, it should be apparent that the disclosed embodiment is susceptible to many modifications and variations all of which will come within the scope of the appended claims.

## Claims

1. A stuffed food product such as stuffed ravioli or alimentary pasta, characterized in that said food product comprises at least two separated pockets provided for holding each a corresponding food product providing, in cooperation, a conventional stuffing material.

2. A food product according to Claim 1, characterized in that said pockets can be respectively filled with cheese and meat, meat and vegetables, or cheese and vegetables, or buttermilk curd and vegetables, or other minced food products in combination.

3. A food product according to Claims 1 and 2, characterized in that said pockets are arranged so as to separate the individual food products held herein in order to allow a long duration preservation of said food products.

4. A food product, in particular a raviolo, characterized in that said raviolo has a size substantially like that of a conventional raviolo.

FIG. 1

FIG. 2

European Patent
Office

**EUROPEAN SEARCH REPORT**

Application Number

EP 91 83 0224

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| Y | EP-A-0 307 614 (SOCIETE DES PRODUITS NESTLE S.A.)<br>* figure 1; abstract; claims 1-3 *<br>--- | 1 | A 23 L 1/16<br>B 65 D 81/32 |
| Y | DE-A-2 642 621 (W. BERKENBUSCH-KOEPER)<br>* figure 1; claims 1-5 *<br>--- | 1 | |
| A | US-A-3 924 009 (L.M. GOLDBERG et al.)<br>* abstract; figure 4, left column, lines 42-58 *<br>--- | 1,2 | |
| A | US-A-4 267 199 (D. KOSHIDA et al.)<br>* abstract; figure; claims 1-8 *<br>--- | 1,2 | |
| A | DE-A-2 008 787 (F. RIGETTI)<br>* claims 1,2 *<br>----- | 1 | |

TECHNICAL FIELDS
SEARCHED (Int. Cl.5)

A 23 L 1/00
B 65 D 81/00

The present search report has been drawn up for all claims

| Place of search | Date of completion of the search | Examiner |
|---|---|---|
| BERLIN | 29-11-1991 | SCHULTZE D |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

\ : member of the same patent family, corresponding
    document

EPO FORM 1503 03.82 (P0401)